# EUROPÄISCHE PATENTSCHRIFT

(11) **EP 0 867 625 B1**
(45) Veröffentlichungstag und Bekanntmachung des Hinweises auf die Patenterteilung: **19.01.2000**
(21) Anmeldenummer: 98103233.7
(22) Anmeldetag: 25.02.1998
(51) Int. Cl.: F16B 37/04, F16C 35/00, F16C 35/04, F16C 23/00

(54) **Lageranordnung**
Bearing assembly
Ensemble palier

(30) Priorität: 27.03.1997 DE 19712997
(43) Veröffentlichungstag der Anmeldung: 30.09.1998
(73) Patentinhaber: INA Wälzlager Schaeffler oHG, 91072 Herzogenaurach (DE)
(72) Erfinder: Lambertz,Hans-Reinhard, 40699 Erkrath (DE); Sauer, Michael, 66424 Homburg (DE)

(56) Entgegenhaltungen:
- FR-A- 2 144 665
- FR-A- 2 320 493

## Beschreibung

### Gebiet der Erfindung

Die Erfindung betrifft eine Lageranordnung mit einem festen Lagergehäuse und einem darin drehbar gelagerten Innenteil, wobei das Lagergehäuse mit Schrauben an einem mit T-förmigen Längsnuten versehenen Profilträger lösbar befestigt ist und in den T-förmigen Längsnuten des Profilträgers als Befestigungselemente jeweils Nutensteine eingesetzt sind, in welchen die Schrauben für die Fixierung des Lagergehäuses eingeschraubt sind, wie diese Lageranordnung z.B. aus dem Dokument FR-A-2 144 665 schon bekannt ist.

### Hintergrund der Erfindung

Aufgrund ihrer Vielseitigkeit werden heute oft Konstruktionsprofile aus Aluminium eingesetzt. Gängige Kugellager-Gehäuseeinheiten lassen sich zwar darauf befestigten, jedoch oft nur unter Zuhilfenahme von zusätzlichen Bauteilen, beispielsweise Zwischenplatten. Der Vorteil bei der Befestigung von Anbauteilen an einem Profilträger unter Verwendung der T-förmigen Längsnuten kann jedoch nur eingeschränkt ausgenutzt werden, weil übliche Lagergehäuse aus Stahlguß, Kunststoff oder Blech mit ihren festen Lochabständen häufig nicht auf die Abstände der Profilträgernuten abgestimmt sind. Außerdem passen die Lochabstände der Lagergehäuse und die Abstände der Profilträgernuten oft auch optisch nicht zusammen. Mit der Verwendung von Zwischenplatten erhöht sich in nachteiliger Weise der Konstruktions- und Herstellungsaufwand.

Bestimmte Profilträger aus Aluminium verlangten bisher eine Befestigung von Anbauteilen unter Verwendung von zwei nebeneinanderliegenden T-förmigen Längsnuten oder einer zentralen T-förmigen Längsnut. Der Anwender mußte daher für jeden speziellen Anwendungsfall zusätzliche Adaptionselemente konstruieren und hinsichtlich der Maße auslegen. Ein solches Adaptionselement, welches zwischen dem Profilträger und dem Lagergehäuse angeordnet wird, kann ein Bauteil aus einem geeigneten Metall oder Kunststoff sein, in welches problemlos Gewindebohrungen für hinreichend feste Schraubverbindungen eingearbeitet werden können. Seine Verwendung hat aber außer dem zusätzlichen Herstellungsaufwand auch den Nachteil, daß die von der Oberfläche des Profilträgers aus gemessene Bauhöhe des Lagers um das Bauteilmaß größer wird.

Eine Lageranordnung der eingangs genannten Art ist aus dem DE-GM 79 06 383 bekannt. Dieses weist als Profilträger kurze Kastenprofile auf, die es ermöglichen, die Köpfe der Befestigungsschrauben von den stirnseitigen Enden in die Kastenprofile einzuführen und anschließend in Gewindebohrungen des Lagergehäuses einzuschrauben. Wenn jedoch statt kurzer Kastenprofile sich lang erstreckende Trägerprofile verwendet werden sollen, um dort an beliebiger Stelle das Lagergehäuse zu befestigen, wird das Einschrauben der Befestigungsschrauben in dem Lagergehäuse schwierig oder sogar unmöglich.

Aus dem Dokument FR-A-2 144 665 ist eine Lageranordnung der eingangs genannten Art mit einem festen Lagergehäuse und einem darin drehbar gelagerten Innenteil bekannt. Das Lagergehäuse besteht zum Teil aus einem Blech mit rechtwinklig abgefalteten Füßen, welche für die Befestigung an einem Profilträger vorgesehen sind. Für die Ausbildung der Befestigung eines massiven Gehäusefußes eines Lagergehäuses an einem Profilträger ist diesem Dokument keine Anregung zu entnehmen.

### Zusammenfassung der Erfindung

Der Erfindung liegt die Aufgabe zugrunde, eine Lageranordnung zu schaffen, die eine einfache Befestigung unterschiedlicher Lagergehäuse an einem mit Längsnuten versehenen Profilträger ermöglicht, wobei auf individuell hergestellte Anpassungsteile verzichtet werden kann.

Diese Aufgabe wird erfindungsgemäß dadurch gelöst, daß das Lagergehäuse im Bereich seines Gehäusefußes seitlich abstehende Längsflansche aufweist, über welche es von Spannpratzen oder Spannleisten an dem Profilträger gehalten ist. Auf diese Weise läßt sich das Lagergehäuse ohne weitere Bearbeitung irgendwelcher Teile an jeder beliebigen Stelle auf dem Profilträger befestigen. Bei geeigneter Wahl des Bohrungsabstandes in der Spannleiste ergibt sich eine Befestigungsmöglichkeit sowohl parallel zum Profilträger als auch quer zu diesem. Für verschiedene Nutabstände der Profilträger brauchen nur verschieden gebohrte Spannleisten geliefert zu werden. Das Gehäuse kann immer das gleiche sein. Die Herstellung des Gehäuses und der Spannleiste aus einem Aluminium-Strangprofil erfordert in vorteilhafter Weise nur wenig spanende Bearbeitung.

Die seitlich abstehenden Flansche können Spannflächen für die Spannpratzen oder Spannleisten aufweisen, welche zu der Anschraubfläche des Profilträgers für das Lagergehäuse parallel verlaufen. Dadurch können die von den Spannelementen auf das Lagergehäuse übertragenen Spannkräfte senkrecht auf die Spannflächen der Flansche und die Anschraubfläche des Profilträgers einwirken, so daß eine Keilwirkung auf das Lagergehäuse nicht erfolgt.

Jede Spannpratze oder Spannleiste kann eine Stufenbohrung aufweisen, in welcher eine der Schrauben angeordnet und in dem zugehörigen, in einer Längsnut des Profilträgers angeordneten Nutenstein eingeschraubt ist. Die Flansche können jeweils durch die Anordnung einer seitlichen Längsnut in dem Lagergehäuse gebildet sein.

### Kurze Beschreibung der Zeichnung

Ausführungsbeispiele der Erfindung sind in der Zeichnung dargestellt und werden im folgenden näher beschrieben. Es zeigen:

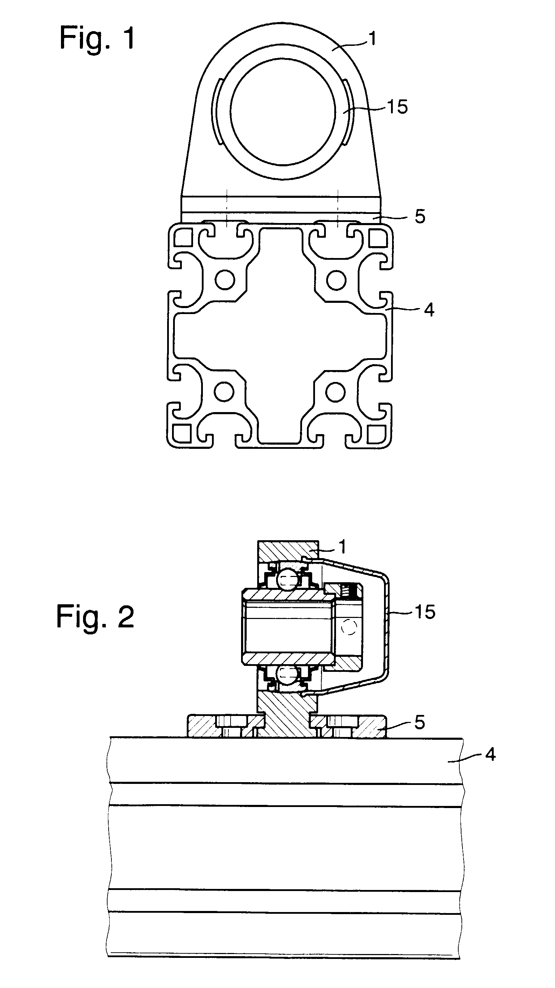

- Figur 1: eine stirnseitige Ansicht eines Profilträgers, auf welchem ein Lagergehäuse mit zur Längsrichtung des Profilträgers paralleler Lagerachse für die Befestigung aufgesetzt ist;
- Figur 2: eine Seitenansicht des Profilträgers mit dem aufgesetzten, jedoch im Längsschnitt dargestellten Lager gemäß Figur 1;

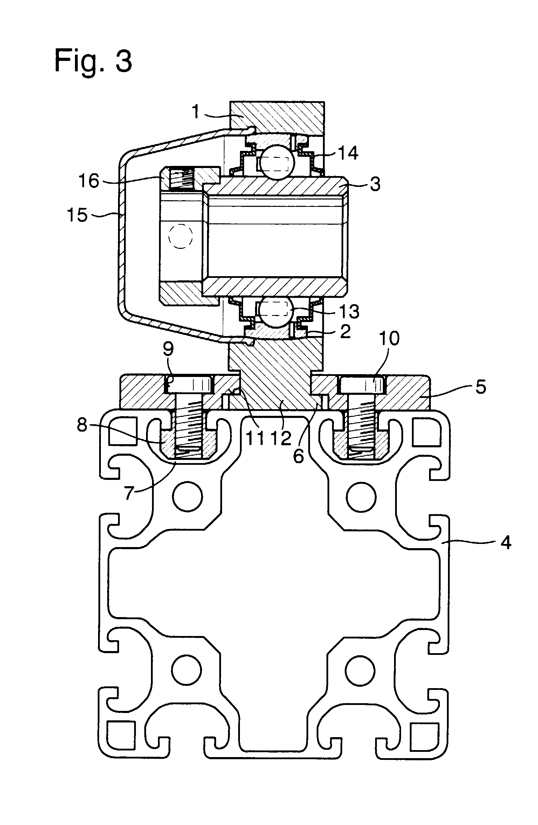

- Figur 3: in vergrößerter Darstellung eine stirnseitige Ansicht des Profilträgers, an welchem ein im Längsschnitt dargestelltes Lager mit zur Längsrichtung des Profilträgers quer verlaufender Lagerachse befestigt ist.

### Ausführliche Beschreibung der Zeichnung

Ein Lagergehäuse 1 ist unmittelbar auf die äußere Oberfläche eines Profilträgers 4 aufgelegt und dort befestigt. In dem Lagergehäuse 1 befinden sich ein Außenring 2 und ein Innenring 3. Die Befestigung ist mit Spannleisten 5 durchgeführt, die sich jeweils an ihren dem Lagergehäuse 1 zugewandten Seiten an einem seitlich abstehenden Flansch 6 des Lagergehäuses 1 abstützen. Außerdem stützen sich die Spannleisten 5 an dem Profilträger 4 ab. Jede Spannleiste 5 befindet sich über einer T-förmigen Längsnut 7 des Profilträgers 4, die zur Spannleiste 5 hin offen ist. In der Längsnut 7 sind in Längsrichtung in Abständen hintereinander mehrere Nutensteine 8 eingesetzt. Jeder Nutenstein 8 kann nur in Längsrichtung der Längsnut 7 verschoben werden und stützt sich in allen anderen Richtungen innerhalb der Längsnut 7 an dem Profilträger 4 ab.

Im Bereich der Nutensteine 8 weist die Spannleiste 5 Stufenbohrungen 9 auf, in welchen Schrauben 10 eingesetzt sind. Zu diesem Zweck weisen die Nutensteine 8 Gewindebohrungen auf, in welchen die Schrauben 10 eingeschraubt sind, wobei sich die Schraubenköpfe innerhalb der Stufenbohrungen 9 axial an der Spannleiste 5 abstützen. Das Lagergehäuse 1 ist also mit Hilfe der Spannleisten 5, der Nutensteine 8 und der Schrauben 10 an dem Profilträger 4 befestigt. Der Flansch 6 des Lagergehäuses 1 ist dadurch gebildet, daß in das Lagergehäuse 1 eine seitliche Nut 11 eingearbeitet ist, die sich im Bereich des Gehäusefußes 12 des Lagergehäuses 1 befindet.

Das dargestellte Lager ist ein Wälzlager, bei welchem zwischen dem Außenring 2 und dem Innenring 3 als Wälzkörper 13 in einem Käfig geführte Kugeln angeordnet sind. Der Bereich der Wälzkörper 13 ist nach außen in axialer Richtung durch Dichtungen 14 verschlossen. Eine Schutzkappe 15 kann wahlweise zur Abdeckung drehender Wellenenden verwendet werden. Der Innenring 3 weist an seiner der Schutzkappe 15 benachbarten Stirnseite einen Spannring 16 auf.

Das Lagergehäuse 1 kann aus einem Aluminium-Strangprofil bestehen. Es enthält das beschriebene Lager mit dem Spannring 16 (Spannringlager), das infolge einer kugelflächenförmigen äußeren Oberfläche seines Außenringes 2 und einer entsprechenden inneren Gehäuseoberfläche eingeschwenkt werden kann und somit winkeleinstellbar ist.

### Bezugszahlenliste

- 1: Lagergehäuse
- 2: Außenring
- 3: Innenring
- 4: Profilträger
- 5: Spannleiste
- 6: Flansch
- 7: Längsnut
- 8: Nutenstein
- 9: Stufenbohrung
- 10: Schraube
- 11: Nut
- 12: Gehäusefuß
- 13: Wälzkörper
- 14: Dichtung
- 15: Schutzkappe
- 16: Spannring

## Patentansprüche

1. Lageranordnung mit einem festen Lagergehäuse (1) und einem darin drehbar gelagerten Innenteil (3), wobei das Lagergehäuse (1) mit Schrauben (10) an einem mit T-förmigen Längsnuten (7) versehenen Profilträger (4) lösbar befestigt ist und in den T-förmigen Längsnuten (7) des Profilträgers (4) als Befestigungselemente jeweils Nutensteine (8) eingesetzt sind, in welchen die Schrauben (10) für die Fixierung des Lagergehäuses (1) eingeschraubt sind, **dadurch gekennzeichnet,** daß das Lagergehäuse (1) im Bereich seines Gehäusefußes (12) seitlich abstehende Flansche (6) aufweist, über welche es von Spannpratzen oder Spannleisten (5) an dem Profilträger (4) gehalten ist.

2. Lageranordnung nach Anspruch 1, **dadurch gekennzeichnet,** daß die Flansche (6) jeweils durch die Anordnung seitlicher Nuten (11) in dem Lagergehäuse (1) gebildet sind.

3. Lageranordnung nach Anspruch 1, **dadurch gekennzeichnet,** daß das Lagergehäuse (1) von Spannleisten (5) an dem Profilträger (4) gehalten ist, wobei die seitlich abstehenden Flansche (6) Spannflächen für die Spannleisten (5) aufweisen, welche zu der benachbarten Oberfläche des Profilträgers (4) parallel verlaufen.

4. Lageranordnung nach Anspruch 1, **dadurch gekennzeichnet,** daß das Lagergehäuse (1) von Spannleisten (5) an dem Profilträger (4) gehalten ist, wobei jede Spannleiste (5) eine Stufenbohrung (9) aufweist, in welcher eine der Schrauben (10) angeordnet und in dem zugehörigen, in einer der Längsnuten (7) des Profilträgers (4) angeordneten Nutenstein (8) eingeschraubt ist.

5. Lageranordnung nach Anspruch 1, **dadurch gekennzeichnet,** daß das drehbar gelagerte Innenteil als Innenring (3) mit einer zentralen Bohrung ausgebildet ist.

6. Lageranordnung nach Anspruch 1, **dadurch gekennzeichnet,** daß in dem Lagergehäuse (1) ein Außenring (2) angeordnet ist, in welchem das drehbare Innenteil mit Wälzkörpern (13) gelagert ist.

## Claims

1. A bearing arrangement with a fixed bearing housing (1) and an inner part (3) rotatably mounted therein, wherein the bearing housing (1) is releasably fixed to a T-shaped profile support (4), provided with longitudinal grooves (7), by means of screws (10) and respective sliding blocks (8) are provided as attachment elements in each T-shaped longitudinal groove (7) of the profile support (4), into which the screws (10) are screwed to fix the bearing housing (1), characterised in that the bearing housing (1) has laterally-projecting flanges (6) in the area of its housing feet (12) via which it is held on the profile support (4) by means of clamping bars or lugs (5).

2. A bearing arrangement according to claim 1, characterised in that the flanges (6) are formed in each case by the disposal of lateral grooves (11) in the bearing housing (1).

3. A bearing arrangement according to claim 1, characterised in that the bearing housing (1) is held on the profile support (4) by means of clamping bars (5), wherein the laterally-projecting flanges (6) have clamping surfaces for the clamping bars (5) which extend parallel to the adjacent surface of the profile support (4).

4. A bearing arrangement according to claim 1, characterised in that the bearing housing (1) is held on the profile support (4) by means of clamping bars (5), wherein each clamping bar (5) has a stepped bore (9) in which one of the screws (10) is disposed and is screwed into the associated sliding block (8), disposed in one of the longitudinal grooves (7) of the profile support (4).

5. A bearing arrangement according to claim 1, characterised in that the rotatably mounted inner part is designed as an inner ring (3) with a central bore.

6. A bearing assembly according to claim 1, characterised in that an outer ring (2) is disposed in the bearing housing (1) in which the rotatable inner part is mounted with roller bodies (13).

## Revendications

1. Dispositif de palier comprenant un corps de palier (1) fixe recevant à rotation une partie intérieure (3), le corps de palier (1) se fixant de manière amovible avec des vis (10) sur un profilé (4) muni de rainures longitudinales (7) à section en forme de T et les rainures longitudinales (7) en forme de T du profilé (4) reçoivent des galets à rainure (8) comme éléments de fixation, les vis (10) étant vissées dans les galets pour bloquer le corps de palier (1),
caractérisé en ce que
le corps de palier (1) présente dans la zone de son pied, (12) des brides (6) en saillie vers le côté et qui tiennent le corps de palier sur le profilé (4) par des pattes ou longerons de serrage (5).

2. Dispositif de palier selon la revendication 1,
caractérisé en ce que
les brides (6) sont formées respectivement par des rainures latérales (11) réalisées dans le corps de palier (1).

3. Dispositif de palier selon la revendication 1,
caractérisé en ce que
le corps de palier (1) est tenu sur le profilé (4) par des longerons de serrage (5) coopérant avec les surfaces de serrage de la bride (6), en saillie vers le côté, ces surfaces étant parallèles à la surface supérieure voisine du profilé (4) .

4. Dispositif de palier selon la revendication 1,
caractérisé en ce que
le corps de palier (1) est tenu sur le profilé (4) par les longerons de serrage (5) et chaque longeron de serrage (5) comporte un perçage étagé (9) recevant une vis (10) par ailleurs vissée dans un galet à rainure (8) correspondant, logé dans une rainure longitudinale (7) du profilé (4).

5. Dispositif selon la revendication 1,
caractérisé en ce que
la partie intérieure rotative est une bague intérieure (3) munie d'un perçage central.

6. Dispositif selon la revendication 1,
caractérisé par
une bague extérieure (2) logée dans le corps de palier (1) et recevant la partie intérieure rotative avec des organes de roulement (13).
